# EUROPÄISCHE PATENTANMELDUNG

(11) **EP 2 846 431 A1**
(43) Veröffentlichungstag der Anmeldung: **11.03.2015**
(21) Anmeldenummer: 14181658.7
(22) Anmeldetag: 20.08.2014
(51) Int. Cl.: H02H 1/00, H02H 11/00, H02H 5/10, B23K 9/10, G01V 15/00

(54) **Schutzschaltung sowie Energieversorgungseinheit und elektrische Schweißanlage mit einer solchen Schutzschaltung**

(30) Priorität: 10.09.2013 DE 102013109928
(71) Anmelder: Lorch Schweisstechnik GmbH, 71549 Auenwald (DE)
(72) Erfinder: Göppert, Josef, 72127 Kusterdingen (DE)
(74) Vertreter: Hoeger, Stellrecht & Partner Patentanwälte

(57) **Zusammenfassung**

Zum Schutz einer zwischen einer Gleichspannungsquelle (24; 64; 114) und einem elektrischen Schweißgerät (18; 58; 108; 183) angeordneten steckbaren und/oder schaltbaren elektrischen Verbindungseinrichtung (20; 60; 110) wird eine Schutzschaltung (30; 70; 118) vorgeschlagen, die eine Überwachungseinrichtung (32; 72; 120) und eine mit der Überwachungseinrichtung (32; 72; 120) gekoppelte Unterbrechungseinrichtung (38; 78; 138) aufweist, wobei mittels der Überwachungseinrichtung (32; 72; 120) das Trennen der Verbindung zwischen der Gleichspannungsquelle (24; 64; 114) und dem Schweißgerät (18; 58; 108; 183) erkennbar und daraufhin mittels der Unterbrechungseinrichtung (38; 78; 138) der Stromkreis zwischen der Gleichspannungsquelle (24; 64; 114) und dem Schweißgerät (18; 58; 108; 183) unterbrechbar ist, und wobei die Überwachungseinrichtung (32; 72; 120) ein Identifikationsglied (44) umfasst, mit dessen Hilfe das Schweißgerät identifizierbar ist. Außerdem werden eine Energieversorgungseinheit (12; 52; 102; 181) und eine elektrische Schweißanlage (10; 50; 100; 160; 180) mit einer derartigen Schutzschaltung (30; 70; 118) vorgeschlagen.

## Beschreibung

Die Erfindung betrifft eine Schutzschaltung zum Schutz einer zwischen einer Gleichspannungsquelle und einem elektrischen Schweißgerät angeordneten steckbaren und/oder schaltbaren elektrischen Verbindungseinrichtung.

Außerdem betrifft die Erfindung eine Energieversorgungseinheit für ein elektrisches Schweißgerät mit einer Gleichspannungsquelle, die einen elektrischen Akkumulator aufweist, und mit einer Schutzschaltung der eingangs genannten Art. Darüber hinaus betrifft die Erfindung eine elektrische Schweißanlage mit einem elektrischen Schweißgerät und einer derartigen Energieversorgungseinheit.

Elektrische Schweißgeräte kommen zum Elektroschweißen eines Werkstückes zum Einsatz und umfassen eine Schweißelektronik, an die ein Schweißbrenner mit einer Schweißelektrode angeschlossen wird. Zur Versorgung der Schweißelektronik mit elektrischer Energie wird die Schweißelektronik häufig an eine Wechselspannungsquelle angeschlossen, zum Beispiel an das öffentliche Spannungsversorgungsnetz. Um Schweißarbeiten auch unabhängig vom Zugang zu einem öffentlichen Spannungsversorgungsnetz durchführen zu können, sind auch Schweißgeräte bekannt, in die ein elektrischer Akkumulator integriert ist. Es ist auch bekannt, elektrische Schweißgeräte, die hauptsächlich an eine Wechselspannungsquelle angeschlossen werden, zeitweise mit elektrischer Energie aus einer separaten Energieversorgungseinheit zu versorgen, die eine Gleichspannungsquelle mit einem elektrischen Akkumulator aufweist. So ist beispielsweise ein elektrisches Schweißgerät bekannt, dessen Schweißelektronik eingangsseitig eine Gleichrichterschaltung aufweist, die die am Eingang anliegende elektrische Wechselspannung in eine pulsierende Gleichspannung wandelt. Die pulsierende Gleichspannung wird einer getakteten Brückenschaltung zugeführt, die die bereitgestellte Gleichspannung in Abhängigkeit von Steuersignalen einer Steuereinheit in eine hochfrequente Wechselspannung wandelt. Die hochfrequente Wechselspannung wird einem Inverter zugeführt, zum Beispiel einem Resonanzkonverter, dem eine zweite Gleichrichterschaltung nachgeordnet ist. Der Resonanzkonverter transformiert die hochfrequente Wechselspannung, die anschließend von der zweiten Gleichrichterschaltung gleichgerichtet wird. Die von der zweiten Gleichrichterschaltung bereitgestellte Gleichspannung liegt am Ausgang des Schweißgerätes an und kann der Schweißelektrode des Schweißbrenners bereitgestellt werden. Falls keine Wechselspannungsquelle zugänglich ist, kann das Schweißgerät temporär auch mit Energie aus einer Gleichspannungsquelle versorgt werden. Hierzu kann eine steckbare und/oder schaltbare elektrische Verbindungseinrichtung zum Einsatz kommen, über die die Gleichspannungsquelle mit dem elektrischen Schweißgerät verbunden wird.

Die elektrische Verbindungseinrichtung kann beispielsweise in Form einer Steckverbindung oder beispielsweise auch in Form eines Umschalters ausgeschaltet sein. Sie weist mehrere Paare von miteinander zusammenwirkenden Verbindungselementen auf. Die Paare von Verbindungselementen können beispielsweise einen Stecker und eine Buchse umfassen.

Während des Betriebs des mit der Gleichspannungsquelle verbundenen Schweißgerätes fließt von der Gleichspannungsquelle üblicherweise ein Gleichstrom von mehr als 5 A, beispielsweise mindestens 10 A, zum Schweißgerät. Von der Gleichspannungsquelle wird eine Gleichspannung von über 50 V bereitgestellt, beispielsweise eine Gleichspannung im Bereich von etwa 90 V bis cirka 500 V. Bei derartigen Gleichspannungs- und Gleichstromwerten besteht die Gefahr, dass sich beim Trennen der Verbindung zwischen der Gleichspannungsquelle und dem in Betrieb befindlichen Schweißgerät zwischen den miteinander zusammenwirkenden Verbindungselementen der Verbindungseinrichtung ein Lichtbogen ausbildet, der zu einer Gefährdung des Benutzers sowie zu einer Beschädigung der Verbindungseinrichtung führen kann. Ist das Schweißgerät an eine Wechselspannungsquelle angeschlossen und wird während des Betriebs des Schweißgerätes die Verbindung zur Wechselspannungsquelle getrennt, so erlischt ein derartiger Lichtbogen üblicherweise beim nächsten Nulldurchgang der Wechselspannung. Ist das Schweißgerät jedoch an eine Gleichspannungsquelle angeschlossen, so führt das Trennen der Verbindung zwischen dem Schweißgerät und der Gleichspannungsquelle nicht ohne weiteres zum Erlöschen des Lichtbogens. Der Lichtbogen kann sich über eine Länge von mehreren Zentimetern erstrecken.

Zur Vermeidung eines derartigen Lichtbogens kann in Erwägung gezogen werden, das Trennen der Verbindung zwischen der Gleichspannungsquelle und dem Schweißgerät konstruktiv zu verhindern, so lange das Schweißgerät in Betrieb ist. Derartige konstruktive Maßnahmen sind aber in aller Regel nicht praktikabel.

Es kann auch in Erwägung gezogen werden, die elektrische Verbindungseinrichtung speziell an die Anforderungen einer Gleichspannungsquelle anzupassen, die eine Gleichspannung von mindestens 50 V und einen Gleichstrom von mindestens 5 A bereitstellt. Da die Verbindungseinrichtung jedoch hauptsächlich zum Einsatz kommen soll, wenn statt einer Gleichspannungsquelle eine Wechselspannungsquelle zur Energieversorgung des Schweißgerätes herangezogen wird, ist auch die Bereitstellung einer speziell an die Anforderungen einer Gleichspannungsquelle angepassten elektrischen Verbindungseinrichtung in vielen Fällen nicht praktikabel.

Aufgabe der vorliegenden Erfindung ist es daher, eine Schutzschaltung zum Schutz einer zwischen einer Gleichspannungsquelle und einem elektrischen Schweißgerät angeordneten steckbaren und/oder schaltbaren elektrischen Verbindungseinrichtung bereitzustellen.

Diese Aufgabe wird erfindungsgemäß durch eine Schutzschaltung mit den Merkmalen von Patentanspruch 1 gelöst.

Die erfindungsgemäße Schutzschaltung weist eine Überwachungseinrichtung und eine mit der Überwachungseinrichtung gekoppelte Unterbrechungseinrichtung auf. Mittels der Überwachungseinrichtung ist das Trennen der Verbindung zwischen der Gleichspannungsquelle und dem Schweißgerät berührungslos oder berührungsbehaftet erkennbar und daraufhin ist mittels der Unterbrechungseinrichtung der Stromkreis zwischen der Gleichspannungsquelle und dem Schweißgerät sicher unterbrechbar. Die Unterbrechungseinrichtung gewährleistet eine sichere Unterbrechung von DC-Strömen im genannten Bereich, d.h. bei Gleichströmen von mehr als 5 A und Gleichspannungen von mehr als 50 V.

Wird bei Einsatz der Schutzschaltung beispielsweise eine zwischen der Gleichspannungsquelle und dem elektrischen Schweißgerät angeordnete Steckverbindung getrennt oder ein zwischen der Gleichspannungsquelle und dem Schweißgerät angeordneter Umschalter in seine Offenstellung bewegt, während das Schweißgerät noch in Betrieb ist und somit von der Gleichspannungsquelle ein Gleichstrom von mehr als 5 A zum Schweißgerät fließt, so wird das Trennen der Verbindung zwischen der Gleichspannungsquelle und dem Schweißgerät von der Überwachungseinrichtung erkannt, die daraufhin der Unterbrechungseinrichtung ein Signal bereitstellt, das zur Folge hat, dass die Unterbrechungseinrichtung den Stromkreis zwischen der Gleichspannungsquelle und dem Schweißgerät sicher unterbricht. Dadurch kann sich kein dauerhafter Lichtbogen zwischen den Verbindungselementen der Verbindungseinrichtung ausbilden.

Die Überwachungseinrichtung weist ein Identifikationsglied auf, wobei mittels des Identifikationsglieds ein elektrisches Schweißgerät identifizierbar ist. Beim Herstellen der Verbindung zwischen der Gleichspannungsquelle und dem Schweißgerät kann das Schweißgerät identifiziert werden.

Bei einer besonders bevorzugten Ausgestaltung der erfindungsgemäßen Schutzschaltung weist die Überwachungseinrichtung ein Lichtbogenerkennungsglied auf, wobei mittels des Lichtbogenerkennungsglieds ein sich beim Trennen der Verbindung zwischen der Gleichstromquelle und dem Schweißgerät ausbildender Lichtbogen erkennbar ist. Wird während des Betriebs des Schweißgeräts die Verbindung zwischen der Gleichspannungsquelle und dem Schweißgerät getrennt, so werden die jeweils miteinander zusammenwirkenden Verbindungselemente der steckbaren und/oder schaltbaren elektrischen Verbindungseinrichtung in Abstand zueinander gebracht und es kann sich kurzzeitig zwischen den Verbindungselementen ein Lichtbogen ausbilden. Der sich ausbildende Lichtbogen wird jedoch vom Lichtbogenerkennungsglied erkannt und daraufhin wird mittels der Unterbrechungseinrichtung der Stromkreis zwischen der Gleichspannungsquelle und dem Schweißgerät unterbrochen, so dass der Lichtbogen wieder erlischt.

Das Lichtbogenerkennungsglied weist bei einer bevorzugten Ausgestaltung der Erfindung ein Analyseglied auf, wobei mittels des Analyseglieds die dynamischen Eigenschaften des über die Verbindungseinrichtung fließenden Stromes oder der an der Verbindungseinrichtung anliegenden Spannung erfassbar sind. In die Ausgestaltung einer derartigen Ausführungsform der Erfindung fließt der Gedanke mit ein, dass sich mit der Ausbildung eines Lichtbogens die Dynamik des über die Verbindungseinrichtung fließenden Stromes und der an der Verbindungseinrichtung anliegenden Spannung charakteristisch ändert. Die sprunghafte Änderung der Dynamik kann mittels des Analyseglieds erkannt werden und daraufhin kann der Stromkreis zwischen der Gleichspannungsquelle und dem Schweißgerät mittels der Unterbrechungseinrichtung sicher unterbrochen werden, noch bevor der Lichtbogen zu einer Gefährdung führen kann.

Es kann auch vorgesehen sein, dass das Lichtbogenerkennungsglied ein Frequenzanalyseglied aufweist, wobei mittels des Frequenzanalyseglieds ein Spektrum von Frequenzen des über die Verbindungseinrichtung fließenden Stromes oder der an der Verbindungseinrichtung anliegenden Spannung erkennbar ist. Es hat sich gezeigt, dass sich das Frequenzspektrum des über die Verbindungseinrichtung fließenden Stromes und der an der Verbindungseinrichtung anliegenden Spannung sprunghaft ändert, wenn sich beim Trennen der Verbindung zwischen der Gleichspannungsquelle und dem Schweißgerät ein Lichtbogen ausbildet. Die Änderung des Frequenzspektrums dient somit als Hinweis für die Ausbildung eines Lichtbogens, so dass anschließend der Stromkreis zwischen der Gleichspannungsquelle und dem Schweißgerät mittels der Unterbrechungseinrichtung sicher unterbrochen werden kann.

Bei einer vorteilhaften Ausführungsform der Erfindung umfasst die Unterbrechungseinrichtung eine elektrisch steuerbare Schalteinrichtung, die mit der Überwachungseinrichtung gekoppelt ist, wobei mittels der Schalteinrichtung zumindest eine Verbindungsleitung zwischen der Gleichspannungsquelle und dem Schweißgerät unterbrechbar ist.

Es kann beispielsweise vorgesehen sein, dass die Schalteinrichtung als Relais ausgestaltet ist, dessen Lastschalter in der Lage ist, DC-Ströme im genannten Bereich sicher zu unterbrechen. Derartige DC-taugliche Relais sind dem Fachmann an sich bekannt.

Besonders vorteilhaft ist es, wenn mittels der Überwachungseinrichtung nicht nur das Trennen der Verbindung zwischen der Gleichspannungsquelle und dem Schweißgerät erkennbar und daraufhin der Stromkreis zwischen der Gleichspannungsquelle und dem Schweißgerät mittels der Schalteinrichtung unterbrechbar ist, sondern wenn mittels der Überwachungseinrichtung auch das Herstellen der Verbindung zwischen der Gleichspannungsquelle und dem elektrischen Schweißgerät berührungslos oder berührungsbehaftet erkennbar und daraufhin mittels der Schalteinrichtung der Stromkreis zwischen der Gleichspannungsquelle und dem elektrischen Schweißgerät schließbar ist. Bei einer derartigen Ausgestaltung der Erfindung wird das Schweißgerät nur dann von der Gleichspannungsquelle mit elektrischer Energie versorgt, wenn das Herstellen der Verbindung von der Überwachungseinrichtung erkannt und daraufhin der Stromkreis mittels der Schalteinrichtung geschlossen wurde. Dies erhöht die Sicherheit des Betriebes des Schweißgeräts.

Wie bereits erwähnt, umfasst die Überwachungseinrichtung ein Identifikationsglied, wobei mittels des Identifikationsglieds das Schweißgerät identifizierbar ist. Günstig ist es, wenn der Stromkreis zwischen der Gleichspannungsquelle und dem elektrischen Schweißgerät nur nach Identifikation des Schweißgerätes schließbar ist. Bei einer derartigen Ausgestaltung der Erfindung kann vom Schweißgerät ein vorgegebenes oder vorteilhafterweise vorgebbares Identifikationssignal bereitgestellt werden, das vom Identifikationsglied der Schutzschaltung erkannt werden kann. Liegt das vorgegebene oder vorgebbare Identifikationssignal vor, so wird mittels der Schalteinrichtung der Stromkreis zwischen der Gleichspannungsquelle und dem Schweißgerät geschlossen. Wird jedoch ein nicht identifizierbares Schweißgerät an die Gleichspannungsquelle angeschlossen, so gibt die Schalteinrichtung der Schutzschaltung den Stromkreis zwischen der Gleichspannungsquelle und dem unbekannten Schweißgerät nicht frei.

Von Vorteil ist es, wenn das Identifikationsglied ein Speicherelement aufweist, in dem eine Mehrzahl von Identifikationssignalen hinterlegt werden kann, die vom Identifikationsglied mit einem aktuell vorliegenden Identifikationssignal verglichen werden können. Ergibt der Vergleich, dass eines der im Speicherelement hinterlegten Identifikationssignale vorliegt, so gibt die Schalteinrichtung der Schutzschaltung den Stromkreis zwischen der Gleichspannungsquelle und dem Schweißgerät frei. Die Gleichspannungsquelle kann somit lediglich zur Energieversorgung von Schweißgeräten verwendet werden, deren Identifikationssignale im Speicherelement des Identifikationsglieds hinterlegt sind.

Günstig ist es, wenn die Überwachungseinrichtung ein Überwachungsglied und eine Überwachungsleitung aufweist, wobei durch Trennen der Verbindung zwischen der Gleichspannungsquelle und dem Schweißgerät ein über die Überwachungsleitung fließender Überwachungsstrom unterbrechbar ist und das Unterbrechen des Überwachungsstroms vom Überwachungsglied erkennbar ist. Bei einer derartigen Ausgestaltung der Erfindung kann die Überwachung der elektrischen Verbindung zwischen der Gleichspannungsquelle und dem elektrischen Schweißgerät nach dem Ruhestromprinzip erfolgen. Liegt eine elektrische Verbindung zwischen der Gleichspannungsquelle und dem Schweißgerät vor, so fließt über die Überwachungsleitung ein Überwachungsstrom, der eine verhältnismäßig geringe Amplitude aufweisen kann. Wird während des Betriebs des Schweißgerätes die Verbindung zwischen der Gleichspannungsquelle und dem Schweißgerät getrennt, so führt dies zu einer Unterbrechung des Überwachungsstroms. Diese Unterbrechung wird vom Überwachungsglied erkannt und daraufhin kann der Stromkreis zwischen der Gleichspannungsquelle und dem Schweißgerät mittels der Unterbrechungseinrichtung unterbrochen werden, um der Ausbildung eines Lichtbogens entgegenzuwirken.

Bei einer konstruktiv besonders einfachen Ausgestaltung der erfindungsgemäßen Schutzschaltung ist in die Überwachungsleitung ein mit der elektrischen Verbindungseinrichtung berührungslos oder berührungsbehaftet zusammenwirkender Endschalter geschaltet. Derartige Endschalter bilden Sensoren aus, die berührungslos oder berührungsbehaftet erkennen, wenn die Verbindungselemente zumindest eines Paares der Verbindungselemente der Verbindungseinrichtung einen Abstand zueinander einnehmen, wie dies beim Trennen der elektrischen Verbindung zwischen der Gleichspannungsquelle und dem Schweißgerät der Fall ist. Werden die Verbindungselemente in Abstand zueinander gebracht, so nimmt der in die Überwachungsleitung geschaltete Endschalter seine offene Schaltstellung ein und unterbricht dadurch den über die Überwachungsleitung fließenden Überwachungsstrom. Das Unterbrechen des Überwachungsstroms kann dann vom Überwachungsglied erkannt werden und daraufhin kann der Stromkreis zwischen der Gleichspannungsquelle und dem Schweißgerät unterbrochen werden, so dass sich zwischen den miteinander zusammenwirkenden Verbindungselementen kein Lichtbogen ausbilden kann.

Bevorzugt weist der Endschalter ein mechanisches Betätigungselement auf, das den Endschalter in seine offene Schaltstellung überführt, wenn die miteinander zusammenwirkenden Verbindungselemente zumindest eines Paares der Verbindungselemente der Verbindungseinrichtung in Abstand zueinander gebracht werden. Das Betätigungselement kann beispielsweise in Form eines Schaltstößels ausgebildet sein.

Es kann auch vorgesehen sein, dass der Endschalter einen berührungslos arbeitenden Abstandssensor aufweist, der das Überschreiten eines maximal zulässigen Abstandes zwischen den miteinander zusammenwirkenden Verbindungselementen der Verbindungseinrichtung erkennt, so dass anschließend die elektrische Verbindung zwischen der Gleichspannungsquelle und dem Schweißgerät unterbrochen werden kann.

Der Abstandssensor kann beispielsweise in Form eines Ultraschallsensors ausgebildet sein oder beispielsweise auch in Form eines magnetfeldempfindlichen Sensors.

Wie bereits erwähnt, weist die elektrische Verbindungseinrichtung, über die die Gleichspannungsquelle mit dem Schweißgerät verbindbar ist, mehrere Paare von miteinander zusammenwirkenden Verbindungselementen auf, beispielsweise mehrere Paare von Stecker und Buchsen einer Steckverbindung oder mehrere Paare von Kontaktelementen eines Schalters. Günstig ist es, wenn ein Paar von Verbindungselementen in die Überwachungsleitung geschaltet ist. Wird die Verbindung zwischen der Gleichspannungsquelle und dem Schweißgerät mittels der Verbindungseinrichtung getrennt, so hat dies zur Folge, dass auch die Verbindungselemente, die in die Überwachungsleitung geschaltet sind, einen Abstand zueinander einnehmen und dadurch der über die Überwachungsleitung fließende Überwachungsstrom unterbrochen wird. Die Unterbrechung des Überwachungsstroms kann von dem Überwachungsglied der Überwachungseinrichtung erkannt werden und daraufhin kann der Stromkreis zwischen der Gleichspannungsquelle und dem Schweißgerät unterbrochen werden, um der Ausbildung eines Lichtbogens entgegenzuwirken.

Besonders günstig ist es, wenn das in die Überwachungsleitung geschaltete Paar von Verbindungselementen bezogen auf die anderen Paare von Verbindungselementen der Verbindungseinrichtung voreilend öffnet. Wird die elektrische Verbindung zwischen der Gleichspannungsquelle und dem Schweißgerät mittels der Verbindungseinrichtung getrennt, so nehmen zuerst die Verbindungselemente einen Abstand zueinander ein, die in die Überwachungsleitung geschaltet sind, so dass der Überwachungsstrom unterbrochen wird und die Unterbrechung des Überwachungsstroms vom Überwachungsglied bereits erkannt werden kann, noch bevor die restlichen Verbindungselemente der Verbindungseinrichtung einen Abstand zueinander einnehmen.

Von Vorteil ist es, wenn die Überwachungsleitung in Reihe zu einer Verbindungsleitung geschaltet ist, über die die Gleichspannungsquelle mit dem Schweißgerät verbunden ist. Bei einer derartigen Ausgestaltung der Erfindung fließt über eine Verbindungsleitung nicht nur der von der Gleichspannungsquelle dem Schweißgerät bereitgestellte Gleichstrom sondern auch der Überwachungsstrom, dessen Unterbrechung vom Überwachungsglied erkannt werden kann. Hierzu ist die Verbindungsleitung in Reihe zur Überwachungsleitung geschaltet.

Bei einer vorteilhaften Ausgestaltung der Erfindung ist über die Überwachungsleitung ein Steuer- und/oder Identifikationssignal übertragbar. Bei einer derartigen Ausführungsform fließt über die Überwachungsleitung nicht nur der Überwachungsstrom sondern zusätzlich kann über die Überwachungsleitung auch ein Steuersignal oder ein Identifikationssignal übertragen werden. Beispielsweise kann über die Überwachungsleitung ein Identifikationssignal vom Schweißgerät zur Gleichspannungsquelle übertragen werden. Alternativ oder ergänzend kann beispielsweise von der Gleichspannungsquelle an das Schweißgerät ein Steuersignal übertragen werden. Das Steuersignal kann dem Schweißgerät beispielsweise signalisieren, dass ein elektrischer Akkumulator der Gleichspannungsquelle in Kürze seine Entladeschlussspannung erreicht und somit in Kürze keine elektrische Energie mehr zur Verfügung stellen kann. Dies kann das Schweißgerät veranlassen, den Schweißbetrieb selbsttätig einzustellen, um eine Tiefenentladung des elektrischen Akkumulators zu vermeiden.

Wie eingangs erwähnt, betrifft die Erfindung nicht nur eine Schutzschaltung der voranstehend erläuterten Art sondern auch eine Energieversorgungseinheit für ein elektrisches Schweißgerät mit einer Gleichspannungsquelle, die einen elektrischen Akkumulator aufweist. Um zu vermeiden, dass sich beim Trennen der Energieversorgungseinheit vom elektrischen Schweißgerät während dessen Betriebs ein Lichtbogen zwischen miteinander zusammenwirkenden Verbindungselementen einer Verbindungseinrichtung ausbildet, über die die Energieversorgungseinheit mit dem Schweißgerät verbunden ist, weist die Energieversorgungseinheit eine Schutzschaltung der voranstehend erläuterten Art auf.

Die Energieversorgungseinheit ist bevorzugt tragbar ausgebildet in Form einer separat vom Schweißgerät handhabbaren Geräteeinheit. Die Energieversorgungseinheit kann somit für Schweißgeräte zum Einsatz kommen, an die alternativ auch eine übliche Wechselspannungsquelle angeschlossen werden kann. Die Verbindung zwischen der Energieversorgungseinheit und dem Schweißgerät kann hierbei mittels einer üblichen Verbindungseinrichtung erfolgen, die nicht an die speziellen Erfordernisse eines hohen Gleichstromes und einer hohen Gleichspannung angepasst ist. Insbesondere kann die Verbindungseinrichtung als übliche Stecker-Buchsen-Verbindung ausgebildet sein, wie sie zum Anschließen des Schweißgerätes an das öffentliche Spannungsversorgungsnetz zum Einsatz kommt. Die Verbindungseinrichtung ist somit nicht speziell an die Anforderungen einer Gleichspannung von mehr als 50 V und eines Gleichstromes von mehr als 5 A ausgelegt. Dennoch kann der Ausbildung eines Lichtbogens beim Trennen der Verbindung zwischen der Energieversorgungseinheit und dem Schweißgerät während des Betriebs des Schweißgeräts entgegengewirkt werden, indem die Energieversorgungseinheit wie voranstehend erläutert eine Schutzschaltung aufweist.

Die Erfindung betrifft darüber hinaus eine elektrische Schweißanlage mit einem elektrischen Schweißgerät und einer Energieversorgungseinheit, wie sie voranstehend erläutert wurde, wobei das Schweißgerät wahlweise an eine Wechselspannungsquelle oder an die Energieversorgungseinheit anschließbar ist. Das Schweißgerät kann ebenso wie die elektrische Verbindungseinrichtung für den Anschluss einer Wechselspannungsquelle ausgelegt sein. Steht eine Wechselspannungsquelle, beispielsweise das öffentliche Spannungsversorgungsnetz, nicht zur Verfügung, so kann die Energieversorgung mittels der voranstehend genannten Energieversorgungseinheit erfolgen, wobei der Ausbildung eines Lichtbogens beim Trennen der Verbindung zwischen der Energieversorgungseinheit und dem Schweißgerät durch die Bereitstellung der Schutzschaltung entgegengewirkt wird.

Die nachfolgende Beschreibung vorteilhafter Ausführungsformen der Erfindung dient im Zusammenhang mit der Zeichnung der näheren Erläuterung. Es zeigen:
- Figur 1:: eine schematische Darstellung einer ersten Ausführungsform einer Schutzschaltung zum Schutz einer Verbindung zwischen einer Gleichspannungsquelle und einem Schweißgerät;
- Figur 2:: eine schematische Darstellung einer zweiten Ausführungsform einer Schutzschaltung zum Schutz einer Verbindung zwischen einer Gleichspannungsquelle und einem Schweißgerät;
- Figur 3:: eine schematische Darstellung einer dritten Ausführungsform einer Schutzschaltung zum Schutz einer Verbindung zwischen einer Gleichspannungsquelle und einem Schweißgerät;
- Figur 4:: eine schematische Darstellung einer vierten Ausführungsform einer Schutzschaltung zum Schutz einer Verbindung zwischen einer Gleichspannungsquelle und einem Schweißgerät; und
- Figur 5:: eine schematische Darstellung einer fünften Ausführungsform einer Schutzschaltung zum Schutz einer Verbindung zwischen einer Gleichspannungsquelle und einem Schweißgerät.

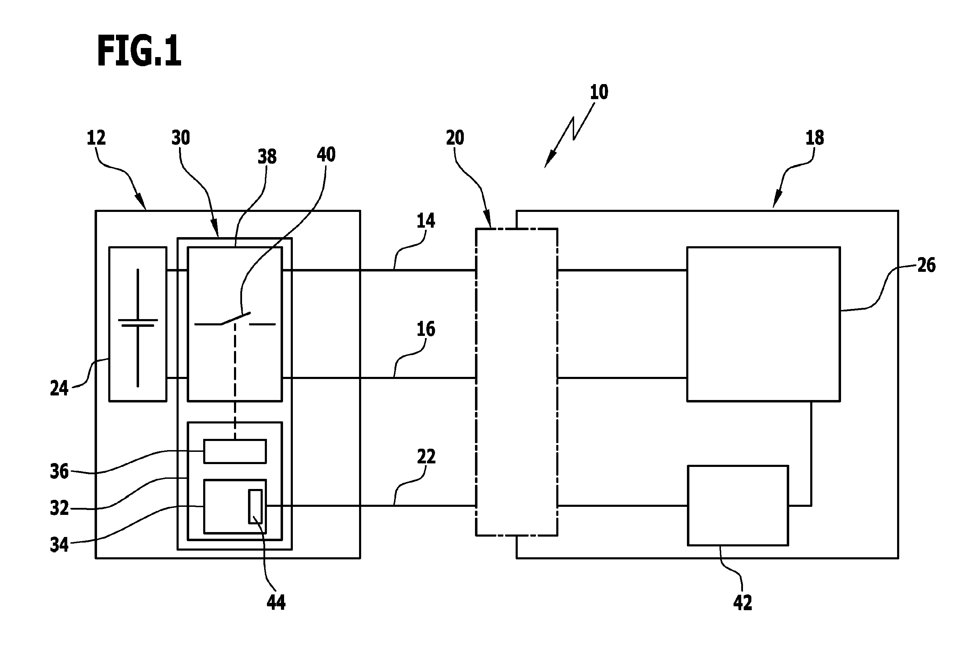

In Figur 1 ist schematisch eine erste Ausführungsform einer erfindungsgemäßen Schweißanlage dargestellt, die insgesamt mit dem Bezugszeichen 10 belegt ist. Die Schweißanlage 10 umfasst eine vorteilhafte Ausführungsform einer erfindungsgemäßen Energieversorgungseinheit, die insgesamt mit dem Bezugszeichen 12 belegt ist und die über eine erste Verbindungsleitung 14 und eine zweite Verbindungsleitung 16 mit einem elektrischen Schweißgerät 18 verbunden ist. In die Verbindungsleitungen 14, 16 ist eine steckbare und/oder schaltbare elektrische Verbindungseinrichtung 20 geschaltet, mit deren Hilfe die elektrische Verbindung zwischen der Energieversorgungseinheit 12 und dem Schweißgerät 18 hergestellt und bei Bedarf auch getrennt werden kann. Die Energieversorgungseinheit 12 ist tragbar und in Form einer separat handhabbaren Geräteeinheit ausgebildet.

Zusätzlich zu der ersten Verbindungsleitung 14 und der zweiten Verbindungsleitung 16 ist die Energieversorgungseinheit 12 bei der in Figur 1 dargestellten Schweißanlage 10 über eine Überwachungsleitung 22 mit dem Schweißgerät 18 verbunden, wobei die Verbindungseinrichtung 20 auch in die Überwachungsleitung 22 geschaltet ist.

Die Energieversorgungseinheit 12 weist eine Gleichspannungsquelle in Form eines elektrischen Akkumulators 24 auf, der dem Schweißgerät 18 über die erste Verbindungsleitung 14 und die zweite Verbindungsleitung 16 eine Gleichspannung und einen Gleichstrom bereitstellt. Im dargestellten Ausführungsbeispiel beträgt die Gleichspannung mindestens 90 V und der Gleichstrom ist typischerweise größer als 5 A.

Das Schweißgerät 18 umfasst eine Schweißelektronik 26, an deren Ausgang in üblicher Weise ein in der Zeichnung zur Erzielung einer besseren Übersicht nicht dargestellter Schweißbrenner mit einer Schweißelektrode angeschlossen werden kann.

Zusätzlich zum Akkumulator 24 weist die Energieversorgungseinheit 12 eine erste Ausführungsform einer erfindungsgemäßen Schutzschaltung auf, die insgesamt mit dem Bezugszeichen 30 belegt ist. Die Schutzschaltung 30 umfasst eine Überwachungseinrichtung 32 mit einer Detektionseinrichtung 34 und einem Steuerglied 36. Außerdem umfasst die Schutzschaltung 30 eine Unterbrechungseinrichtung 38, die im dargestellten Ausführungsbeispiel in Form einer vom Steuerglied 36 elektrisch steuerbaren Schalteinrichtung 40 ausgebildet ist.

Wie bereits erwähnt, kann das Schweißgerät 18 von der Energieversorgungseinheit 12 mit elektrischer Energie versorgt werden, die über die erste Verbindungsleitung 14 und die zweite Verbindungsleitung 16 übertragen wird. Vom elektrischen Akkumulator 24 wird außerdem ein Überwachungsstrom bereitgestellt, der über die Überwachungsleitung 22 von der Energieversorgungseinheit 12 zum Schweißgerät 18 fließt. Wird die Verbindung zwischen der Energieversorgungseinheit 12 und dem Schweißgerät 18 getrennt, indem miteinander zusammenwirkende Verbindungselemente der Verbindungseinrichtung 20 in Abstand zueinander gebracht werden, so wird dadurch der über die Überwachungsleitung 22 fließende Überwachungsstrom unterbrochen. Dies wird von der Detektionseinrichtung 34 erkannt, die daraufhin dem Steuerglied 36 das Unterbrechen des Überwachungsstroms signalisiert. Das Steuerglied 36 steuert dann die Schalteinrichtung 40 derart an, dass die Schalteinrichtung 40 in ihre offene Schaltstellung übergeht und somit der Stromkreis zwischen dem Akkumulator 24 und dem Schweißgerät 18 sicher unterbricht. Die Schalteinrichtung 40 kann einpolig oder mehrpolig ausgestaltet sein. Somit kann über die Verbindungsleitungen 14 und 16 kein Gleichstrom mehr fließen. Dies wiederum stellt sicher, dass beim Trennen der Verbindung zwischen der Energieversorgungseinheit 12 und dem Schweißgerät 18 sich kein Lichtbogen im Bereich der Verbindungseinrichtung 20 ausbilden kann, selbst wenn das Schweißgerät 18 noch in Betrieb ist.

Zusätzlich zur Schweißelektronik 26 weist das Schweißgerät 18 eine Identifikationsschaltung 42 auf, die in die Überwachungsleitung 22 geschaltet ist. Die Identifikationsschaltung 42 gibt die Möglichkeit, vom Schweißgerät 18 über die Überwachungsleitung 22 ein Identifikationssignal an ein Identifikationsglied 44 der Detektionseinrichtung 34 zu übertragen. Beim Herstellen der Verbindung zwischen der Energieversorgungseinheit 12 und dem Schweißgerät 18 kann das von der Identifikationsschaltung 42 bereitgestellte Identifikationssignal vom Identifikationsglied 44 mit in einem Speicherelement des Identifikationsglieds 44 hinterlegten zulässigen Identifikationssignalen verglichen werden. Liegt eine Übereinstimmung mit einem der zulässigen Identifikationssignale vor, so wird dies dem Steuerglied 36 signalisiert, das die Schalteinrichtung 40 derart ansteuert, dass diese ihre geschlossene Schaltstellung einnimmt, so dass der Stromkreis zwischen dem elektrischen Akkumulator 24 und dem Schweißgerät 18 geschlossen ist. Wird vom Schweißgerät 18 kein Identifikationssignal oder aber ein unbekanntes Identifikationssignal bereitgestellt, so nimmt die Schalteinrichtung 40 ihre offene Schaltstellung ein, so dass dem Schweißgerät keine elektrische Energie bereitgestellt wird. Dies gibt die Möglichkeit, mit Hilfe des Identifikationsglieds 44 auch das Auftrennen der Verbindung zu detektieren.

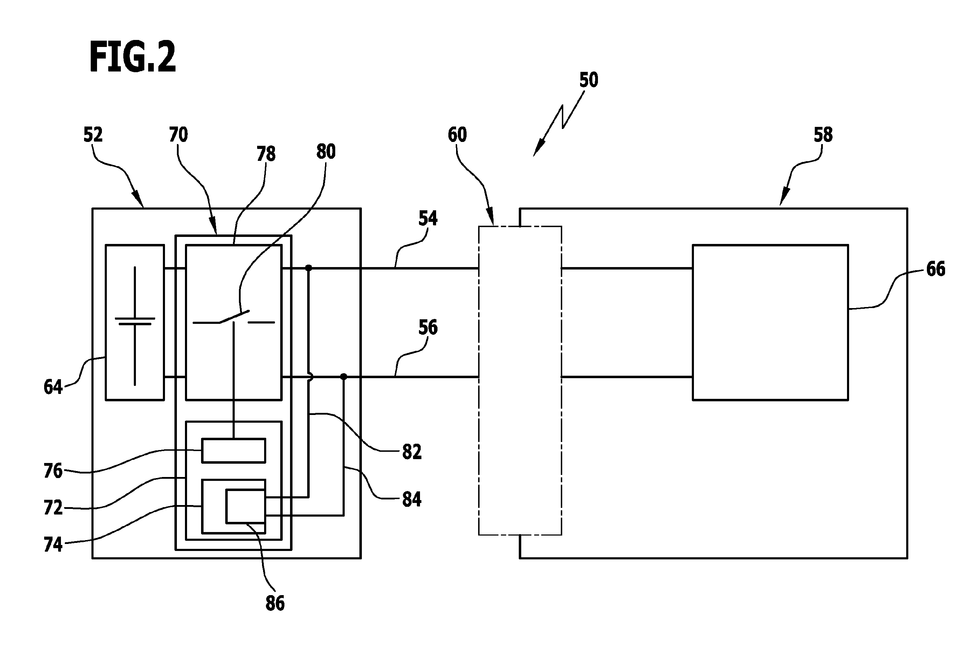

In Figur 2 ist eine zweite vorteilhafte Ausführungsform einer erfindungsgemäßen Schweißanlage dargestellt, die insgesamt mit dem Bezugszeichen 50 belegt ist. Die Schweißanlage 50 weist eine zweite vorteilhafte Ausführungsform einer erfindungsgemäßen Energieversorgungseinheit auf, die insgesamt mit dem Bezugszeichen 52 belegt ist und die über eine erste Verbindungsleitung 54 und eine zweite Verbindungsleitung 56 mit einem Schweißgerät 58 verbunden ist. In die erste Verbindungsleitung 54 und in die zweite Verbindungsleitung 56 ist eine steckbare und/oder schaltbare elektrische Verbindungseinrichtung 60 geschaltet.

Im Unterschied zu der in Figur 1 dargestellten Schweißanlage 10 kommt bei der in Figur 2 dargestellten Schweißanlage 50 keine zusätzliche Überwachungsleitung zum Einsatz.

Die Energieversorgungseinheit 52 weist eine Gleichspannungsquelle in Form eines elektrischen Akkumulators 64 auf und das Schweißgerät 18 umfasst eine Schweißelektronik 66, an deren Ausgang in üblicher Weise ein Schweißbrenner mit einer Schweißelektrode angeschlossen werden kann.

Zusätzlich zum elektrischen Akkumulator 64 weist die Energieversorgungseinheit 52 eine vorteilhafte Ausführungsform einer erfindungsgemäßen Schutzschaltung auf, die insgesamt mit dem Bezugszeichen 70 belegt ist. Die Schutzschaltung 70 umfasst eine Überwachungseinrichtung 72 mit einer Detektionseinrichtung 74 und einem Steuerglied 76. Außerdem umfasst die Schutzschaltung 70 eine Unterbrechungseinrichtung 78, die in Form einer vom Steuerglied 76 steuerbaren elektrischen Schalteinrichtung 80 ausgebildet ist.

Die Detektionseinrichtung 74 ist eingangsseitig über eine erste Detektionsleitung 82 mit der ersten Verbindungsleitung 54 und über eine zweite Detektionsleitung 84 mit der zweiten Verbindungsleitung 56 verbunden. Dies gibt der Detektionseinrichtung 74 die Möglichkeit, die an der ersten Verbindungsleitung 54 und der zweiten Verbindungsleitung 56 anliegende Spannung abzugreifen. Die Detektionseinrichtung 74 weist ein Lichtbogenerkennungsglied 86 auf, mit dessen Hilfe ein sich beim Trennen der Verbindung zwischen der Energieversorgungseinheit 52 und dem Schweißgerät 58 im Bereich der Verbindungseinrichtung 60 ausbildender Lichtbogen anhand der sich sprunghaft ändernden Dynamik des über die Verbindungsleitungen 54, 56 fließenden Stromes oder der an der Verbindungseinrichtung 60 anliegenden Spannung erkannt werden kann. Das Lichtbogenerkennungsglied weist hierzu ein Analyseglied auf. Alternativ kann vorgesehen sein, dass das Lichtbogenerkennungsglied 86 ein Frequenzanalyseglied umfasst, mit dessen Hilfe ein Spektrum von Frequenzen des über die Verbindungseinrichtung 60 fließenden Stromes oder der an der Verbindungseinrichtung 60 anliegenden Spannung erfassbar ist. Eine sprunghafte Änderung des Frequenzspektrums deutet darauf hin, dass sich im Bereich der Verbindungseinrichtung 60 ein Lichtbogen ausbildet.

Wird vom Lichtbogenerkennungsglied 86 das Ausbilden eines Lichtbogens im Bereich der Verbindungseinrichtung 60 erkannt, so wird dies dem Steuerglied 76 signalisiert, das daraufhin die Schalteinrichtung 80 derart ansteuert, dass die Schalteinrichtung 80 ihre offene Schaltstellung einnimmt und damit den Stromkreis zwischen dem Akkumulator 64 und dem Schweißgerät 58 sicher unterbricht. Die Gefahr eines Lichtbogens besteht, wie bereits erläutert, wenn während des Betriebs des Schweißgeräts 58, das heißt in einem Zustand, in dem über die Verbindungsleitungen 54, 56 ein erheblicher Gleichstrom fließt und an der Verbindungseinrichtung 60 eine erhebliche Gleichspannung anliegt, die Verbindung zwischen der Energieversorgungseinheit 52 und dem Schweißgerät 58 getrennt wird. Hierbei nehmen miteinander zusammenwirkende Verbindungselemente der Verbindungseinrichtung 60, nachdem sie zuvor unmittelbar aneinander anliegen, einen zunehmenden Abstand zueinander ein, so dass sich unter der Wirkung der hohen Gleichspannung und des hohen Gleichstromes ein Lichtbogen zwischen den einander zusammenwirkenden Verbindungselementen ausbilden kann. Das Lichtbogenerkennungsglied der Detektionseinrichtung 74 erkennt einen derartigen Lichtbogen und anschließend kann mittels der Schalteinrichtung 80 die elektrische Verbindung zwischen der Energieversorgungseinheit 52 und dem Schweißgerät 58 sicher getrennt werden.

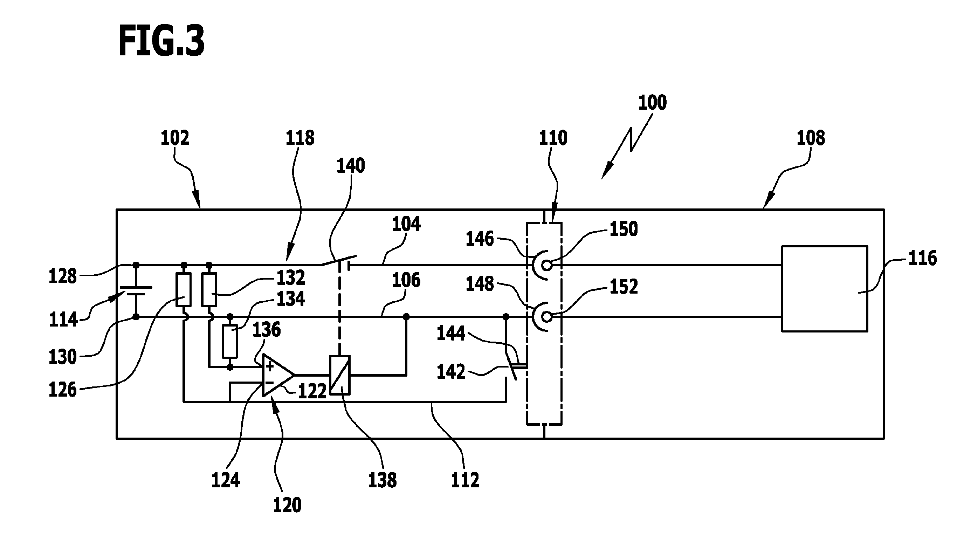

Auch bei der Ausführungsform gemäß Figur 2 kann ein Identifikationsglied vorgesehen sein zum Identifizieren eines Schweißgeräts. Das Identifikationsglied kann beispielsweise in die Detektionseinrichtung 74 integriert sein. Das Identifikationsglied kann das Schweißgerät zum Beispiel anhand von charakteristischen elektrischen oder dynamischen Eigenschaften erkennen. Es kann das Herstellen der Verbindung zum Schweißgerät als auch das Auftrennen der Verbindung erfasst werden. Identifikationsglieder können auch bei den nachfolgend beschriebenen vorteilhaften Ausführungsformen zum Einsatz kommen. Zur Erzielung einer besseren Übersicht sind die Identifikationsglieder in den Figuren 3 bis 5 nicht dargestellt.

In Figur 3 ist eine dritte vorteilhafte Ausgestaltung einer Schweißanlage schematisch dargestellt, die insgesamt mit dem Bezugszeichen 100 belegt ist. Die Schweißanlage 100 weist eine vorteilhafte Ausführungsform einer erfindungsgemäßen Energieversorgungseinheit auf, die insgesamt mit dem Bezugszeichen 102 belegt ist und die über eine Verbindungsleitung 104 und eine zweite Verbindungsleitung 106 mit einem Schweißgerät 108 verbunden ist. Die Verbindung erfolgt über eine steckbare und/oder schaltbare elektrische Verbindungseinrichtung 110, in die nicht nur in die erste Verbindungsleitung 104 und die zweite Verbindungsleitung 106 sondern zusätzlich eine Überwachungsleitung 112 geschaltet ist, die eine weitere Verbindung herstellt zwischen der Energieversorgungseinheit 102 und dem Schweißgerät 108.

Die Energieversorgungseinheit 102 weist eine Gleichspannungsquelle in Form eines elektrischen Akkumulators 114 auf und das Schweißgerät 108 weist eine Schweißelektronik 116 auf, an deren Ausgang in üblicher Weise ein Schweißbrenner mit einer Schweißelektrode angeschlossen werden kann.

Zusätzlich zum Akkumulator 114 weist die Energieversorgungseinheit 102 eine vorteilhafte Ausführungsform einer erfindungsgemäßen Schutzschaltung auf, die insgesamt mit dem Bezugszeichen 118 belegt ist. Die Schutzschaltung 118 umfasst eine Überwachungseinrichtung 120 mit einem Differenzverstärker 122, dessen invertierender Eingang 124 über einen ersten ohmschen Widerstand 126 mit dem Pluspol 128 des elektrischen Akkumulators 124 verbunden ist. Der Pluspol 128 ist über einen Spannungsteiler mit dem Minuspol 130 des elektrischen Akkumulators 124 verbunden, wobei der Spannungsteiler von einem zweiten ohmschen Widerstand 132 und einem in Reihe zum zweiten ohmschen Widerstand 132 geschalteten dritten ohmschen Widerstand 134 gebildet wird.

Der nicht-invertierende Eingang 136 des Differenzverstärkers 122 greift das Potential zwischen dem zweiten ohmschen Widerstand 132 und dem dritten ohmschen Widerstand 134 ab.

Die Schutzschaltung 118 weist außerdem eine Unterbrechungseinrichtung auf, die im dargestellten Ausführungsbeispiel als Relais 138 ausgestaltet ist. Das Relais wird vom Differenzverstärker 122 gesteuert und weist ein Schaltkontaktelement 140 auf, das in die erste Verbindungsleitung 104 geschaltet ist und die sichere Trennung von DC-Strömen größer 5 A bei Gleichspannungen größer 50 V gewährleistet.

Die Überwachungsleitung 112 verbindet den invertierenden Eingang 124 des Differenzverstärkers 122 mit der an den Minuspol 130 angeschlossenen zweiten Verbindungsleitung 106. In die Überwachungsleitung 112 ist ein Endschalter 142 geschaltet, der im dargestellten Ausführungsbeispiel berührungsbehaftet mit der elektrischen Verbindungseinrichtung 110 zusammenwirkt, indem er von einem Schaltstößel 144 mechanisch betätigt werden kann. Der Schaltstößel 144 wirkt mit der Verbindungseinrichtung 110 derart zusammen, dass er beim Trennen der Verbindung zwischen der Energieversorgungseinheit 102 und dem Schweißgerät 108 den Endschalter 142 in seine offene Schaltstellung überführt.

Die Verbindungseinrichtung 110 weist erste Verbindungselemente 146, 148 auf, die jeweils mit einem zweiten Verbindungselement 150, 152 zusammenwirken. Die ersten Verbindungselemente 146, 148 können beispielsweise als Buchsen ausgebildet sein und die zweiten Verbindungselemente 150, 152 können beispielsweise als Stecker ausgestaltet sein.

Ist die Verbindung zwischen der Energieversorgungseinheit 102 und dem Schweißgerät 108 hergestellt, so kann über die erste Verbindungsleitung 104 und die zweite Verbindungsleitung 106 ein Gleichstrom von über 5 A fließen, wobei das Schaltkontaktelement 140 des Relais 138 seine Schließstellung einnimmt. Auch der Endschalter 142 ist bei Vorliegen einer elektrischen Verbindung zwischen der Energieversorgungseinheit 102 und dem Schweißgerät 108 geschlossen, so dass über die Überwachungsleitung 112 vom Pluspol 128 zum Minuspol 130 ein Überwachungsstrom fließen kann. Der Differenzverstärker 122 steuert in diesem Fall das Relais 138 derart an, dass das Schaltkontaktelement 140 schließt.

Wird die Verbindung zwischen der Energieversorgungseinheit 102 und dem Schweißgerät 108 getrennt, indem die ersten Verbindungselemente 146, 148 einen zunehmenden Abstand zu den zweiten Verbindungselementen 150, 152 einnehmen, so geht der Endschalter 142 in seinen offenen Schaltzustand über und dies hat zur Folge, dass der über die Überwachungsleitung 112 fließende Überwachungsstrom unterbrochen wird. Dies wiederum bewirkt, dass der Differenzverstärker 122 das Relais 138 derart ansteuert, dass das Schaltkontaktelement 140 in seine Offenstellung übergeht und damit den Stromkreis zwischen dem Akkumulator 114 und dem Schweißgerät 108 sicher unterbricht. Das Trennen der Verbindung zwischen der Energieversorgungseinheit 102 und dem Schweißgerät 108 während des laufenden Betriebes des Schweißgeräts 108 hat somit nicht zur Folge, dass sich zwischen dem ersten Verbindungselement 146 und dem zweiten Verbindungselement 150 oder zwischen dem ersten Verbindungselement 148 und dem zweiten Verbindungselement 152 ein Lichtbogen ausbilden kann.

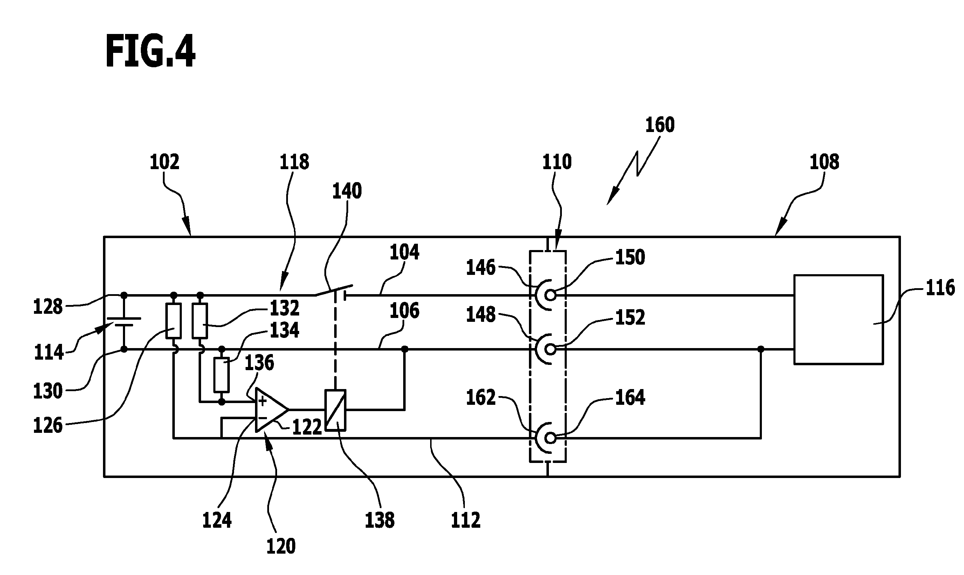

In Figur 4 ist eine vierte vorteilhafte Ausführungsform einer erfindungsgemäßen Schweißanlage schematisch dargestellt, die insgesamt mit dem Bezugszeichen 160 belegt ist. Die Schweißanlage 160 ist weitgehend identisch ausgebildet wie die voranstehend unter Bezugnahme auf die Figur 3 erläuterte Schweißanlage 100. Für identische Bauteile werden daher in Figur 4 dieselben Bezugszeichen verwendet wie in Figur 3 und bezüglich dieser Bauteile wird zur Vermeidung von Wiederholungen auf die voranstehenden Erläuterungen Bezug genommen.

Von der Schweißanlage 100 unterscheidet sich die Schweißanlage 160 dadurch, dass die Verbindungseinrichtung 110 zusätzlich zu den ersten Verbindungselementen 146, 148 und den zweiten Verbindungselementen 150, 152 ein weiteres erstes Verbindungselement 162 und ein mit diesem zusammenwirkendes weiteres zweites Verbindungselement 164 aufweist. Die Überwachungsleitung 112 ist über das weitere erste Verbindungselement 162 und das weitere zweite Verbindungselement 164 zum Schweißgerät 108 geführt und im Bereich des Eingangs der Schweißelektronik 116 an die zweite Verbindungsleitung 106 angeschlossen. Der Pluspol 128 ist über die Überwachungsleitung 112 und die in Reihe zur Überwachungsleitung 112 geschaltete zweite Verbindungsleitung 106 mit dem Minuspol 130 verbunden, wobei zur Vermeidung eines Kurzschlusses in die erste Überwachungsleitung 112 der erste ohmsche Widerstand 126 geschaltet ist.

Wird bei der in Figur 4 dargestellten Schweißanlage 160 die elektrische Verbindung zwischen der Energieversorgungseinheit 102 und dem Schweißgerät 108 unterbrochen, so werden unter anderem auch das weitere erste Verbindungselement 162 und das weitere zweite Verbindungselement 164 voneinander getrennt. Dies führt zu einer Unterbrechung des über die Überwachungsleitung 112 führenden Überwachungsstromes, und diese Unterbrechung hat zur Folge, dass das Relais 138 unter der Wirkung einer entsprechenden Ansteuerung des Differenzverstärkers 122 das Schaltkontaktelement 140 in seine Offenstellung überführt und damit den Stromkreis zwischen dem Akkumulator 114 und dem Schweißgerät 108 sicher trennt, so dass sich im Bereich der Verbindungseinrichtung 110 kein Lichtbogen ausbilden kann.

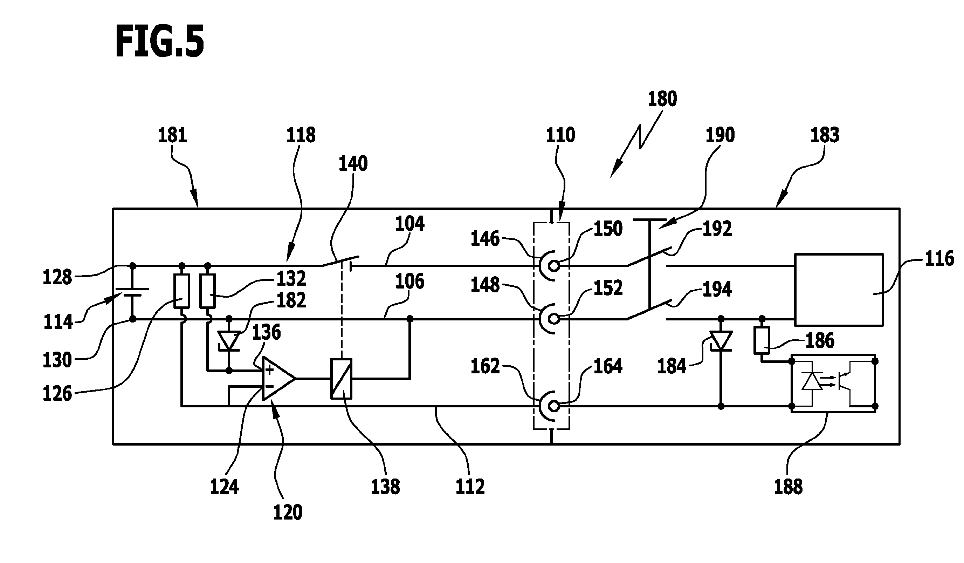

In Figur 5 ist eine fünfte vorteilhafte Ausführungsform einer erfindungsgemäßen Schweißanlage dargestellt, die insgesamt mit dem Bezugszeichen 180 belegt ist. Die Schweißanlage 180 ist weitgehend identisch ausgebildet wie die voranstehend unter Bezugnahme auf Figur 4 dargestellte Schweißanlage 160. Für identische Bauteile werden daher in Figur 5 dieselben Bezugszeichen verwendet wie in Figur 4 und bezüglich dieser Bauteile wird zur Vermeidung von Wiederholungen auf die voranstehenden Erläuterungen Bezug genommen.

Von der in Figur 4 dargestellten Schweißanlage 160 unterscheidet sich die Schweißanlage 180 unter anderem durch eine Energieversorgungseinheit 181, bei der statt des dritten ohmschen Widerstands 134 eine in Sperrrichtung geschaltete erste Zenerdiode 182 zum Einsatz kommt, deren Zenerspannung im dargestellten Ausführungsbeispiel etwa 10 V beträgt. Ein weiterer Unterschied ergibt sich durch ein Schweißgerät 183, in dessen Bereich eine zweite Zenerdiode 184 in Sperrrichtung in die Überwachungsleitung 112 geschaltet ist, wobei die Zenerspannung der zweiten Zenerdiode 184 im dargestellten Ausführungsbeispiel etwa 5,1 V beträgt. Parallel zur zweiten Zenerdiode 184 sind ein vierter ohmscher Widerstand 186 sowie die Eingänge eines Optokopplers 188 geschaltet, dessen Ausgänge in aus der Zeichnung nicht ersichtlicher Weise mit der Schweißelektronik verbunden sind. Über den Optokoppler 188 kann dem Schweißgerät 183 signalisiert werden, dass die Energieversorgungseinheit 181 angeschlossen ist. Wird die Energieversorgungseinheit 181 vom Schweißgerät 183 getrennt, so entfällt das der Schweißelektronik 116 vom Optokoppler 188 bereitgestellte Signal.

Im Bereich zwischen der Verbindungseinrichtung 110 und der Schweißelektronik 116 weist das Schweißgerät 183 der Schweißanlage 180 einen Hauptschalter 190 auf mit einem ersten Schaltkontakt 192, der in die erste Verbindungsleitung 104 geschaltet ist, und einem zweiten Schaltkontakt 194, der in die zweite Verbindungsleitung 106 geschaltet ist.

Wird bei der Schweißanlage 180 die elektrische Verbindung zwischen der Energieversorgungseinheit 181 und dem Schweißgerät 183 mittels der Verbindungseinrichtung 110 getrennt, so dass die jeweils miteinander zusammenwirkenden Paare von Verbindungselementen in Abstand zueinander gebracht werden, so führt dies zu einer Unterbrechung des über die Überwachungsleitung 112 fließenden Überwachungsstroms, und dies wiederum hat zur Folge, dass das Schaltkontaktelement 140 des Relais 138 in seine offene Schaltstellung übergeht und damit den Stromkreis zwischen dem Akkumulator 114 und dem Schweißgerät 183 sicher unterbricht, so dass sich im Bereich der Verbindungseinrichtung 110 kein Lichtbogen ausbilden kann.

Der Hauptschalter 190 des Schweißgerätes 183 der Schweißanlage 180 ist als üblicher Netzschalter ausgebildet, mit dessen Hilfe die an das Schweißgerät 108 angeschlossene Versorgungsspannung ein- und ausgeschaltet werden kann. Der Hauptschalter 190 ist nicht für das Schalten hoher Gleichströme und hoher Gleichspannungen ausgelegt. Ist die Energieversorgungseinheit 181 an das Schweißgerät 183 angeschlossen, so dass dieses mit einer Gleichspannung und mit einem Gleichstrom versorgt wird, so wird durch die Bereitstellung der Schutzschaltung 118 auch der Ausbildung eines Lichtbogens im Bereich des zweiten Schaltkontaktes 194 entgegengewirkt. Die Ausbildung eines Lichtbogens im Bereich des Schaltkontaktes 194 hat nämlich zur Folge, dass sich im Bereich des Schaltkontaktes 194 ein zusätzlicher Spannungsabfall ausbildet, der im Hinblick auf das am invertierenden Eingang 124 des Differenzverstärkers anliegende Potential dem Spannungsabfall an der vierten Zenerdiode 184 hinzuzuaddieren ist. Dies bewirkt, dass sich die Spannungsverhältnisse an den Eingängen des Differenzverstärkers 122 umkehren und dieser daraufhin das nachgeordnete Relais 138 derart ansteuert, dass das Schaltkontakteelement 140 öffnet und damit wiederum der Stromkreis zwischen dem Akkumulator 114 und dem Schweißgerät 183 sicher unterbrochen wird. In entsprechender Weise kann durch Bereitstellung eines weiteren Differenzverstärkers auch die Ausbildung eines Lichtbogens im Bereich des ersten Schaltkontaktes 192 erfasst und daraufhin der Stromkreis zwischen dem Akkumulator 114 und dem Schweißgerät 183 sicher unterbrochen werden.

## Patentansprüche

1. Schutzschaltung zum Schutz einer zwischen einer Gleichspannungsquelle (24; 64; 114) und einem elektrischen Schweißgerät (18; 58; 108; 183) angeordneten steckbaren und/oder schaltbaren elektrischen Verbindungseinrichtung (20; 60; 110), **dadurch gekennzeichnet, dass** die Schutzschaltung (30; 70; 118) eine Überwachungseinrichtung (32; 72; 120) und eine mit der Überwachungseinrichtung (32; 72; 120) gekoppelte Unterbrechungseinrichtung (38; 78; 138;) aufweist, wobei mittels der Überwachungseinrichtung (32; 72; 120) das Trennen der Verbindung zwischen der Gleichspannungsquelle (24; 64; 114) und dem Schweißgerät (18; 58; 108; 183) erkennbar und daraufhin mittels der Unterbrechungseinrichtung (38; 78; 138;) der Stromkreis zwischen der Gleichspannungsquelle (24; 64; 114) und dem Schweißgerät (18; 58; 108; 183) unterbrechbar ist, und wobei die Überwachungseinrichtung (32; 72; 120) ein Identifikationsglied (44) umfasst, wobei mittels des Identifikationsglieds (44) das elektrische Schweißgerät (18; 58; 108; 183) identifizierbar ist.

2. Schutzschaltung nach Anspruch 1, **dadurch gekennzeichnet, dass** die Überwachungseinrichtung (72) ein Lichtbogenerkennungsglied (86) aufweist, wobei mittels des Lichtbogenerkennungsglieds (86) ein sich beim Trennen der Verbindung zwischen der Gleichspannungsquelle (64) und dem Schweißgerät (58) ausbildender Lichtbogen erkennbar ist.

3. Schutzschaltung nach Anspruch 2, **dadurch gekennzeichnet, dass** das Lichtbogenerkennungsglied (86) ein Analyseglied aufweist, wobei mittels des Analyseglieds die dynamischen Eigenschaften des über die Verbindungseinrichtung (60) fließenden Stromes oder der an der Verbindungseinrichtung (60) anliegenden Spannung erfassbar sind.

4. Schutzschaltung nach Anspruch 2, **dadurch gekennzeichnet, dass** das Lichtbogenerkennungsglied (86) ein Frequenzanalyseglied aufweist, wobei mittels des Frequenzanalyseglieds ein Spektrum von Frequenzen des über die Verbindungseinrichtung (60) fließenden Stromes oder der an der Verbindungseinrichtung (60) anliegenden Spannung erfassbar ist.

5. Schutzschaltung nach einem der voranstehenden Ansprüche, **dadurch gekennzeichnet, dass** die Unterbrechungseinrichtung (38; 78; 138) eine elektrisch steuerbare Schalteinrichtung (40; 80; 140) umfasst, die mit der Überwachungseinrichtung (32; 72; 120) gekoppelt ist, wobei mittels der Schalteinrichtung (40; 80; 140) zumindest eine Verbindungsleitung zwischen der Gleichspannungsquelle (24; 64; 114) und dem Schweißgerät (18; 58; 108; 183) unterbrechbar ist.

6. Schutzschaltung nach Anspruch 5, **dadurch gekennzeichnet, dass** die Schalteinrichtung (140) als DC-taugliches Relais ausgestaltet ist.

7. Schutzschaltung nach Anspruch 5 oder 6, **dadurch gekennzeichnet, dass** mittels der Überwachungseinrichtung (32; 72; 120) das Herstellen der Verbindung zwischen der Gleichspannungsquelle (24; 64; 114) und dem elektrischen Schweißgerät (18; 58; 108; 183) berührungslos oder berührungsbehaftet erkennbar und daraufhin mittels der Schalteinrichtung (40; 80; 140) der Stromkreis zwischen der Gleichspannungsquelle (24; 64; 114) und dem elektrischen Schweißgerät (18; 58; 108; 183) schließbar ist.

8. Schutzschaltung nach einem der voranstehenden Ansprüche, **dadurch gekennzeichnet, dass** der Stromkreis zwischen der Gleichspannungsquelle (24; 64; 114) und dem elektrischen Schweißgerät (18; 58; 108; 183) nach Identifikation des elektrischen Schweißgeräts (18; 58; 108; 183) schließbar ist.

9. Schutzschaltung nach einem der voranstehenden Ansprüche, **dadurch gekennzeichnet, dass** die Überwachungseinrichtung (32; 120) ein Überwachungsglied (34; 122) und eine Überwachungsleitung (22; 112) aufweist, wobei durch Trennen der Verbindung zwischen der Gleichspannungsquelle (24; 114) und dem Schweißgerät (18; 108; 183) ein über die Überwachungsleitung (22; 112) fließender Überwachungsstrom unterbrechbar ist und das Unterbrechen des Überwachungsstroms vom Überwachungsglied (34; 122) erkennbar ist.

10. Schutzschaltung nach Anspruch 9, **dadurch gekennzeichnet, dass** in die Überwachungsleitung (112) ein mit der Verbindungseinrichtung (110) berührungslos oder berührungsbehaftet zusammenwirkender Endschalter (142) geschaltet ist.

11. Schutzschaltung nach Anspruch 9, **dadurch gekennzeichnet, dass** die Verbindungseinrichtung (110) mehrere Paare von miteinander zusammenwirkenden Verbindungselementen (146, 150; 148, 152; 162, 164) aufweist, wobei ein Paar von Verbindungselementen (162, 164) in die Überwachungsleitung (112) geschaltet ist.

12. Schutzschaltung nach Anspruch 11, **dadurch gekennzeichnet, dass** das in die Überwachungsleitung geschaltete Paar von Verbindungselementen (162, 164) bezogen auf die restlichen Paare von Verbindungselementen (146, 150; 148, 152) voreilend öffnet.

13. Schutzschaltung nach Anspruch 9, 10, 11 oder 12, **dadurch gekennzeichnet, dass** die Überwachungsleitung (112) in Reihe zu einer Verbindungsleitung (106) geschaltet ist, über die die Gleichspannungsquelle (114) mit dem Schweißgerät (108; 183) verbunden ist.

14. Schutzschaltung nach einem der Ansprüche 9 bis 13, **dadurch gekennzeichnet, dass** über die Überwachungsleitung (22; 112) ein Steuer- oder Identifikationssignal übertragbar ist.

15. Energieversorgungseinheit für ein elektrisches Schweißgerät (18; 58; 108; 183) mit einer Gleichspannungsquelle, die einen elektrischen Akkumulator (24; 64; 114) aufweist, und mit einer Schutzschaltung (30; 70; 118) nach einem der voranstehenden Ansprüche.

16. Energieversorgungseinheit nach Anspruch 15, **dadurch gekennzeichnet, dass** die Energieversorgungseinheit (12; 52; 102; 181) tragbar ist und eine separat vom Schweißgerät (18; 58; 108; 183) handhabbare Geräteeinheit ausbildet.

17. Elektrische Schweißanlage mit einem elektrischen Schweißgerät (18; 58; 108; 183) und einer Energieversorgungseinheit (12; 52; 102; 181) nach Anspruch 15 oder 16, wobei das Schweißgerät (18; 58; 108; 183) wahlweise an eine Wechselspannungsquelle oder an die Energieversorgungseinheit (12; 52; 102; 181) anschließbar ist.
